# EUROPEAN PATENT SPECIFICATION

(11) **EP 0 454 202 B1**
(45) Date of publication and mention of the grant of the patent: **06.07.1994**
(21) Application number: 91200806.7
(22) Date of filing: 05.04.1991
(51) Int. Cl.: A21C 3/06, A22C 7/00

(54) **Apparatus for wrapping a food-stuff wrapper around a food-stuff core**
Apparat zum Wickeln von Nahrungsmitteln um einen Nahrungsmittelkern
Appareil à envelopper une bande alimentaire autour d'un noyau alimentaire

(30) Priority: 27.04.1990 NL 9001023
(43) Date of publication of application: 30.10.1991
(73) Proprietor: BAMACH B.V., NL-2941 BW Lekkerkerk (NL)
(72) Inventor: De Bruyne, Joost, NL-2341 BP Lekkerkerk (NL)
(74) Representative: van der Saag, Johannes

(56) References cited:
- EP-A- 0 280 250
- DE-B- 1 278 272
- DE-C- 591 450
- FR-A- 2 388 498
- GB-A- 2 021 924
- NL-C- 29 743
- NL-C- 32 938
- US-A- 3 735 694

## Description

The invention relates to an apparatus for wrapping a wrapper in the form of a slice- shaped or sheet-shaped food product about a substantially cylindrical core consisting of another food product, the apparatus comprising an endless conveyor belt being movable over guide rollers and reversing rollers for conveying the wrapper and the core disposed thereon. US-A-3,735,694 discloses the aforementioned features.

The particular object of the invention is to mechanically produce beef-olives, i.e. a core of food product such as minced meat, in a wrapper in the form of a slice-shaped or sheet-shaped food product, such as a meat product. The application of a conveyor belt for mechanically arranging a wrapper about a core in order to produce beef-olives is already known, but in these methods the wrapper is rolled. This rolling requires sufficient friction between the wrapper and the conveyor belt, but this friction may be insufficient due to e.g. ice deposition on the conveyor belt, originating from the frozen wrapper. Moreover, the conveyor belt may provide insufficient grip on the wrapper due to moisture deposition. Also, the wrapper may be too stiff for rolling. Finally the wrapper may consist of a slice of meat sliced from a lump of meat formed by compressing chunks of meat, so that the slice of meat lacks natural cohesion and may fall apart into pieces.

In order to remove these problems, the invention provides an apparatus of the type referred to above, in which a first frame with at least one first guide roller mounted thereon can be swivelled from a normal position, in which the conveyor belt is substantially stretched and extends past the first guide roller and a first pair of reversing rollers, to a position in which the first guide roller is disposed over a portion of the conveyor belt that precedes the first pair of reversing rollers, and back to said normal position, a second frame with at least one second guide roller mounted thereon being simultaneously swivelled from a normal position in which the second guide roller is located under a portion of the conveyor belt that extends from a second reversing roller, to a position in which the conveyor belt is substantially stretched and extends past the second guide roller and the second reversing roller, and back to said normal position.

Preferably the invented apparatus is characterized in that at least the first pair of reversing rollers, the two frames each with their guide rollers and the second reversing roller are disposed such that during the simultaneous swivelling of the two frames from their normal positions to their swivelled positions and when the frames have reached their swivelled positions, the tension in the conveyor belt remains at least substantially equal to the tension in the conveyor belt when the frames are in their normal positions.

Another important embodiment of the invented apparatus is characterized in that the diameter of the first pair of reversing rollers is adapted to the diameter of the food core plus the thickness of the food wrapper to such an extent, that the wrapper can be wrapped about the core sufficiently tight.

The remaining claims 3, 4, 5 and 7 also offer important features and results of the invention.

The invention will be further elucidated in the following description to the accompanying drawings of a preferred embodiment of the invented apparatus.

In these drawings:
figure 1 shows a schematic side view of the invented apparatus in the position prior to wrapping a wrapper about the core;
figure 2 shows a top view of the apparatus with a core and a wrapper as shown in figure 1;
figure 3 shows a view as shown in figure 1, each of the frames being, however, in a position between the starting position as shown in figure 1 and the wrapping position in figure 4;
figure 4 shows a side view as shown in figures 1 and 3, each of the two frames being, however, in the position in which the wrapper is wrapped about the core;
figure 5 shows a view as shown in figures 1, 3 and 4, each of the two frames having been swivelled back to the position as shown in figure 1 since wrapping the wrapper about the core has been completed.

The invented apparatus shown in the drawing serves to wrap a wrapper 1 about a core 2. The core 2 may be a substantiall cylindrical body of e.g. minced meat, while the wrapping is slice-shaped or sheet-shaped and e.g. consists of meat. However, the core may also initially be a small heap of food product which is formed into a cylinder during wrapping. The core of minced meat and the slice of meat wrapped about it together form a beef-olive. It is clear, however, that the core and the wrapper may consist of other food products with which the invented apparatus is applied.

The drawn embodiment of the invented apparatus comprises an endless conveyor belt 3 of which only the right-hand side has been represented in the accompanying drawing as the invention is exclusively directed to that particular end.

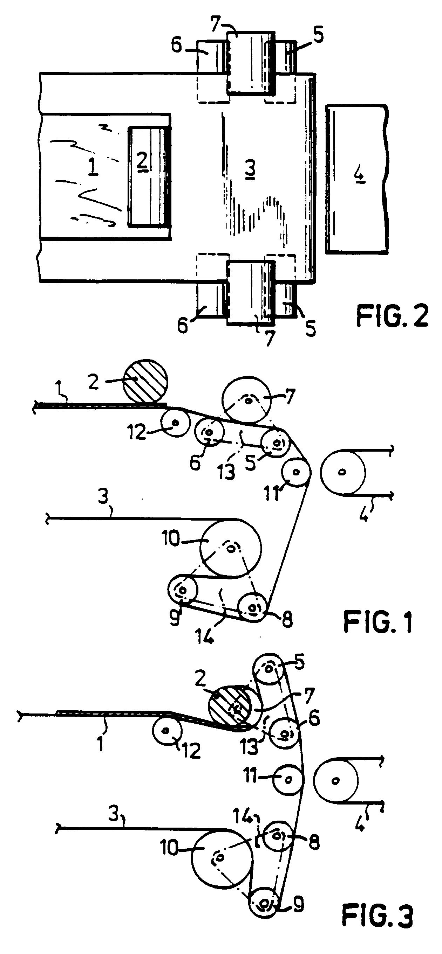

As shown in figure 1, the conveyor belt 3 extends to the right over a carrier roller 12, followed by third and first guide rollers 6 and 5, respectively, mounted on a first frame 13, and also underneath a first pair of reversing rollers 7, an end roll 11, fourth and second guide rollers 8 and 9, respectively, mounted on a second frame 14, and finally a second reversing roller 10.

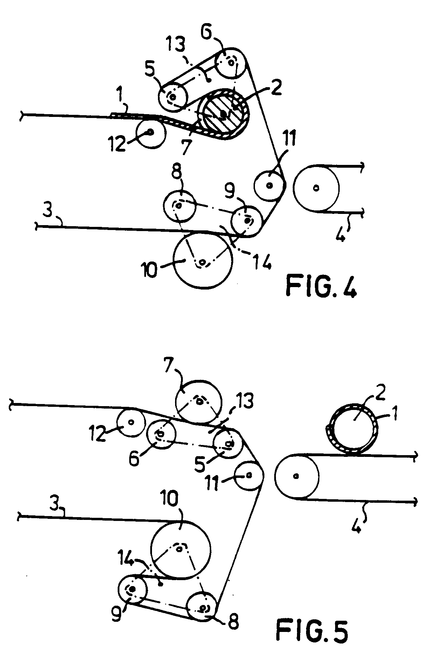

Both frames 13 and 14 can be simultaneously swivelled upwards from their positions as shown in figure 1 to their positions as shown in figure 4, figure 3 showing an intermediate position during swivelling, for clarity's sake. After the wrapping of the wrapper 1 about the core 2 in the manner as shown in figure 4 has been completed, the two frames 13 and 14 are swivelled back to their normal positions as shown in figure 5, which positions are identical to those shown in figure 1. It is possible to couple frames 13 and 14 mechanically.

The finished end product, i.e. the core 2 with the wrapper 1 wrapped about it, is transferred by the conveyor belt 3, after the frames 13 and 14 have been swivelled back to their normal positions as shown in figure 5, to the discharge conveyor 4 which is disposed opposite the end roll 11 of the conveyor belt 3 for that purpose.

Preferably the first frame 13 can be swivelled about the shaft of the first pair of reversing rollers 7 and the second frame 14 can then preferably be swivelled about the shaft of the second reversing roller 10. The means that allow the frames 13 and 14 to swivel are not a part of the invention but may e.g. be an assembly of piston and cylinder.

With the frames 13 and 14 in their upwards swivelled position as shown in figure 4, the conveyor belt 3 forms a loop from the carrier roller 12 via the first pair of reversing rollers 7 up to the first guide roller 5. As by swivelling upwards, the second frame 14 shortens the track of the conveyor belt 3 to the same extent as said track is simultaneously lengthened by the loop in the conveyor belt 3 when the first frame 13 is swivelled upwards, the tension in the conveyor belt 3 remains substantially the same during swivelling the frames, in the upwards position of the frames as shown in figure 4, and when the frames 13 and 14 are in their normal positions as shown in figure 1.

On account of this substantially unaffected tension in the conveyor belt 3, the wrapper 1 is not subjected to stretch, so that the wrapper is not pulled apart into pieces. This is relevant in cases where the wrapper 1 consists of a slice of meat formed by compressing chunks of meat or else is sliced from a lump of meat formed by compressing chunks of meat, so that the slice of meat can easily fall apart into pieces on account of the lack of natural cohesion.

On account of the correct tension in the conveyor belt 3 and the correct ratio between the diameter of the first pair of reversing rollers 7 on the one hand and the diameter of the core 2 plus the thickness of the wrapper 1 on the other hand, the tightness with which the wrapper is wrapped about the core 2 can be adjusted to the desired extent.

As the wrapper 1 remains almost entirely in contact with the conveyor belt 3 during wrapping, the wrapper will less easily be shifted with respect to the conveyor belt 3 than would be the case if the wrapper were rolled about the core 2.

The conveyor belt can optionally be in motion either continuously or intermittently, the intermittent motion thus relating to the stages of the wrapping process.

## Claims

1. Apparatus for wrapping a wrapper (1) in the form of a slice-shaped or sheet-shaped food product about a substantially cylindrical core (2) consisting of another food product, the apparatus comprising an endless conveyor belt (3) being movable over guide rollers and reversing rollers for conveying the wrapper (1) and the core (2) disposed thereon, **characterized in that** a first frame (13) with at least one first guide roller (5) mounted thereon can be swivelled from a normal position, in which the conveyor belt (3) is substantially stretched and extends past the first guide roller (5) and a first pair of reversing rollers (7), to a position in which the first guide roller (5) is disposed over a portion of the conveyor belt (3) that precedes the first pair of reversing rollers (7), and back to said normal position, a second frame (14) with at least one second guide roller (9) mounted thereon being simultaneously swivelled from a normal position in which the second guide roller (9) is located under a portion of the conveyor belt (3) that extends from a second reversing roller (10), to a position in which the conveyor belt (3) is substantially stretched and extends past the second guide roller (9) and the second reversing roller (10), and back to said normal position.

2. Apparatus according to claim 1, **characterized in that** at least the first pair of reversing rollers (7), the two frames (13, 14) each with their guide rollers (5, 6, and 8, 9) and the second reversing roller (10) are disposed such that during the simultaneous swivelling of the two frames from their normal positions to their swivelled positions and when the frames (13, 14) have reached their swivelled positions, the tension in the conveyor belt (3) remains at least substantially equal to the tension in the conveyor belt when the frames (13, 14) are in their normal positions.

3. Apparauts according to claim 1 or 2, **characterized in that** the first frame (13) comprises a third guide roller (6) for guiding the conveyor belt (3) past the first pair of reversing rollers (7) when the frame (13) is in its swivelled position.

4. Apparatus according to any one of the preceding claims, **characterized in that** the second frame (14) comprises a fourth guide roller (8) for guiding the conveyor belt (3) past the second reversing roller (10) when the frame (14) is in its normal position.

5. Apparatus according to any one of the preceding claims, **characterized by** an end roller (11) for the conveyor belt (3), said end roller being disposed opposite the end of a discharge conveyor (4) in such a way that when the two frames (13, 14) are in their normal positions, the conveyor belt (3) transfers the finished food product (1, 2) to the discharge conveyor (4).

6. Apparatus according to any one of the preceding claims, **characterized in that** the diameter of the first pair of reversing rollers (7) is adapted to the diameter of the food core (2) plus the thickness of the food wrapper (1) to such an extent, that the wrapper (1) can be wrapped about the core (2) sufficiently tight.

7. Apparatus according to any one of the preceding claims, **characterized in that** during supplying, wrapping and discharging, the conveyor belt (3) can optionally either be continuously or, adapted to the stages of the wrapping process, intermittently in motion.

## Patentansprüche

1. Vorrichtung, um eine Umhüllung (1) in Form eines scheiben- oder plattenförmiges Lebensmittelprodukts um einen im wesentlichen zylinderförmigen Kern (2), welcher aus einem anderen Lebensmittelprodukt besteht, zu wickeln, wobei die Vorrichtung ein endloses Förderband (3) enthält, das über Führungsrollen und Umkehrrollen zur Förderung der Umhüllung (1) und des darauf angeordneten Kerns (2) bewegbar ist, **dadurch gekennzeichnet,** daß ein erster Rahmen (13) mit zumindest einer darauf angebrachten ersten Führungsrolle (5) aus einer normalen Position, in welcher das Förderband (3) im wesentlichen gestreckt ist und sich vorbei der ersten Führungsrolle (5) und einem ersten Paar Umkehrrollen (7) ausstreckt, zu einer Position in welcher die erste Führungsrolle (5) oberhalb eines Teiles des Förderbandes (3) aufgestellt ist, der dem ersten Paar Umkehrrollen (7) vorangeht, und zurück zu einer normalen Position schwenkbar ist, wobei gleichzeitig ein zweiter Rahmen (14), mit zumindest einer darauf angebrachten zweiten Führungsrolle (9), aus einer normalen Position, in welcher die zweite Führungsrolle (9) unter einem ab einer zweiten Umkehrrolle (10) sich ausstreckenden Teil des Förderbandes (3) gelegen ist, zu einer Position, in welcher das Förderband (3) im wesentlichen gestreckt ist und sich vorbei der zweiten Führungsrolle (9) und der zweiten Umkehrrolle (10) ausstreckt, und zurück zu der normalen Position schwenkbar ist.

2. Vorrichtung nach Anspruch 1, **gekennzeichnet dadurch,** daß zumindest das erste Paar Umkehrrollen (7), die beiden Rahmen (13, 14), jeder mit seinen Führungsrollen (5, 6, und 8, 9) und die zweite Umkehrrolle (10) in einer solchen Weise aufgestellt sind, daß während des gleichzeitigen Schwenkens der beiden Rahmen aus ihrer normalen Position zu ihren Schwenkpositionen und bei in ihren Schwenkpositionen gelegenen Rahmen (13, 14) die Spannung im Förderband (3) zumindest im wesentlichen der Spannung im Förderband bei in ihren normalen Positionen gelegenen Rahmen (13, 14) gleichbleibt.

3. Vorrichtung nach Anspruch 1 oder 2, **dadurch gekennzeichnet,** daß der erste Rahmen (13) von einer dritten Führungsrolle (6) versehen ist, um das Förderband (3) bei in geschwenkter Position des Rahmen (13) an das erste Paar Umkehrrollen (7) vorbeizuführen.

4. Vorrichtung nach einem der vorhergehenden Ansprüche, **dadurch gekennzeichnet,** daß der zweite Rahmen (14) mit einer vierten Führungsrolle (8) versehen ist, um das Förderband (3) bei normaler Position des Rahmens (14) an der zweiten Umkehrrolle (10) vorbeizuführen (14).

5. Vorrichtung nach einem der vorhergehenden Ansprüche, **gekennzeichnet durch** eine Endrolle (11) für das Förderband (3), wobei die Endrolle (11) in einer solchen Weise gegenüber das Ende eines Abfuhrförderbandes (4) aufgestellt ist, daß bei normaler Position der beiden Rahmen (13, 14) das Förderband (3) das fertige Lebensmittelprodukt (1, 2) an das Abfuhrförderband (4) überträgt.

6. Vorrichtung nach einem der vorhergehenden Ansprüchen, **dadurch gekennzeichnet,** daß der Durchmesser des ersten Paares Umkehrrollen (7) dem Durchmesser des Lebensmittelkerns (2) plus der Dicke der Lebensmittelumhüllung (1) in einer solchen Weise angepasst ist, daß die Umhüllung (1) ausreichend straff um den Kern (2) wickelbar ist.

7. Vorrichtung nach einem der vorhergehenden Ansprüche, **dadurch gekennzeichnet,** daß während des Anführens, des Wickelns und des Abführens das Förderband (3) wahlweise kontinuierlich oder, abgestimmt auf den Wickelprozeß, intermittierend in Bewegung sein kann.

## Revendications

1. Appareil servant à envelopper une bande (1) se présentant sous la forme d'un produit alimentaire en forme de tranche ou de feuille autour d'un noyau (2) pratiquement cylindrique, consistant en un autre produit alimentaire, l'appareil comprenant une courroie de transport (3) continue, pouvant se déplacer sur des rouleaux de guidage et des rouleaux de renversement servant à transporter la bande (1) et le noyau (2) disposés sur elle, caractérisé en ce qu'un premier cadre (13) pourvu d'au moins un premier rouleau de guidage (5) monté sur lui peut être pivoté depuis une position normale, dans laquelle la courroie de transport (1) est essentiellement étirée et s'étend au-delà du premier rouleau de guidage (5) et d'un premier couple de rouleaux de renversement (7), vers une position dans laquelle le premier rouleau de guidage (5) est disposé sur une partie de la courroie de transport (3) qui précède le premier couple de rouleaux de renversement (7) et de façon à revenir dans la position normale, un second cadre (14) pourvu d'au moins un second rouleau de guidage (9) monté sur ce dernier, pivoté simultanément depuis une position normale, dans laquelle le second rouleau de guidage (9) se situe au-dessous d'une partie de la courroie de transport (3) qui s'étend depuis un second rouleau de renversement (10), vers une position dans laquelle la courroie de transport (3) est essentiellement étirée et s'étend au-delà du second rouleau de guidage (9) et du second rouleau de renversement (10), de façon à revenir dans ladite position normale.

2. Appareil selon la revendication 1, caractérisé en ce qu'au moins le premier couple de rouleaux de renversement (7), les deux cadres (13, 14) pourvus chacun de leurs rouleaux de guidage (5, 6 et 8, 9) et le second rouleau de renversement (10) sont disposés de manière que, durant le pivotement simultané des deux cadres de façon à passer de leurs positions normales à leurs positions pivotées et lorsque les cadres (13, 14) ont atteint leurs positions pivotées, la tension de la courroie de transport (3) reste au moins pratiquement égale à la tension de la courroie de transport lorsque les cadres (13, 14) se situent dans leurs positions normales.

3. Appareil selon la revendication 1 ou 2, caractérisé en ce que le premier cadre (13) comprend un troisième rouleau de guidage (6) servant à guider la courroie de transport (3) au-delà du premier couple de rouleaux de renversement (7), lorsque le cadre (13) se situe dans sa position pivotée.

4. Appareil selon l'une quelconque des revendications précédentes, caractérisé en ce que le second cadre (14) comprend un quatrième rouleau de guidage (8) servant à guider la courroie de transport (3) au-delà du second rouleau de renversement (10), lorsque le cadre (14) se situe dans sa position normale.

5. Appareil selon l'une quelconque des revendications précédentes, caractérisé par un rouleau d'extrémité (11) destiné à la courroie de transport (3), ledit rouleau d'extrémité étant disposé à l'opposé de l'extrémité d'un transport d'évacuation (4) de manière que, lorsque les deux cadres (13, 14) se situent dans leurs positions normales, la courroie de transport (13) transfère le produit alimentaire (1, 2) fini au transporteur d'évacuation (4).

6. Appareil selon l'une quelconque des revendications précédentes, caractérisé en ce que le diamètre du premier couple de rouleaux de renversement (7) est adapté au diamètre du noyau alimentaire (2) plus l'épaisseur de la bande alimentaire (1), si bien que la bande (1) peut être enveloppée de manière suffisamment serrée autour du noyau (2).

7. Appareil selon l'une quelconque des revendications précédentes, caractérisé en ce que, durant l'amenée, l'enveloppement et l'évacuation, la courroie de transport (3) peut en option être amenée de manière continue ou, de façon à s'adapter aux étapes du procédé d'enveloppement, de manière intermittente.
